# EUROPEAN PATENT SPECIFICATION

(11) **EP 2 930 395 B1**
(45) Date of publication and mention of the grant of the patent: **04.03.2020**
(21) Application number: 14163851.0
(22) Date of filing: 08.04.2014
(51) Int. Cl.: F16F 15/00, B64C 27/00

(54) **A NOISE REDUCTION SYSTEM, A METHOD AND A HELICOPTER**
RAUSCHVERRINGERUNGSSYSTEM, VERFAHREN UND HUBSCHRAUBER
SYSTÈME DE RÉDUCTION DU BRUIT, PROCÉDÉ ET HÉLICOPTÈRE

(43) Date of publication of application: 14.10.2015
(73) Proprietor: Airbus Defence and Space GmbH, 85521 Ottobrunn (DE)
(72) Inventor: Storm, Stefan, 81663 München (DE); Maier, Rudolf, 81663 München (DE); Schatz, Rolf, 86609 Donauwörth (DE)
(74) Representative: Isarpatent

(56) References cited:
- DE-A1- 4 142 885
- DE-A1- 19 925 982
- US-A- 5 660 255
- US-A1- 2005 146 246
- US-A1- 2010 109 219

## Description

A noise reduction system for connecting a noise source with a body according to the preamble of claim 1, a method for suppressing a noise transmission, and a helicopter having such a noise reduction system.

It is known, for example in connection with the mounting of a helicopter power plant to the helicopter cell by connector struts to suppress structureborne/body noise by an active reduction in the structureborne noise/sound transmission. Such active reduction is accomplished by counteracting or compensating structureborne noise caused by primary loads by counterforces and moments in the form of secondary loads which are controlled in closed loop fashion. Such compensation is for example realized by means of magnetostrictive or piezoelectric actuators in connection with a respective inertia mass which introduce the required counterforces or moments into the carrier or connector struts.

The actuators are conventionally secured to a first end of the mounting strut or carrier structure and preferably in the longitudinal direction of the strut or carrier structure. An inertia mass is secured to the opposite or second end of the strut or carrier structure. The actuators move the inertia masses secured to the strut or carrier structure in response to the movements of the struts or carrier structure, thereby causing a superposition of two motions or vibrations, namely the motion of the inertia masses motion at the foot of the strut or carrier structure is superposed on the motion of the strut or carrier structure in such a way that the two motions cancel each other at least partially, whereby structureborne noise is suppressed. This superposition of motions or vibrations takes place in the frequency range of the structureborne noise. Therefore, the conventional devices are capable of at least partially suppressing the transmission of structureborne noise from the power plant to the helicopter cell.

The relatively large weight of the above described conventional noise damping structure is a disadvantage, especially in aircraft such as helicopter structures. The weight includes the actuators and the inertia masses as well as the spatial integration of the structure into the strut or carrier structure. Another disadvantage of the above conventional construction is seen in that the combination of actuators with inertial masses has been found to be wanting with regard to achieving the intended noise reduction to a desirable extent.

Another known noise reduction system is shown in the US patent US6480609B1. Each noise reduction system has at least one piezo actuator which is integrated into or bonded to a connector strut, for example by a suitable adhesive, whereby the at least one piezo actuator is excited by a control power source. In order to achieve an adequate efficiency, the stability of the connector struts should be minimized. However, minimizing the connector struts stability can cause structural conflicts.

US 2010/ 109219 A1 discloses interfaces for damping mechanical vibrations having a base connection element, a load connection element and a support element, with the support element being connected to the base connection element via a pretensioning device. A first energy converter system extends between engagement points on the base connection element and engagement points on the load connection element. A second energy converter system extends between engagement points on the support element and engagement points on the load connection element.

From US 5 660 255 A an active vibration isolation system including a plurality of stiff actuators, such as piezoelectric motors which support a small mass inside of a case. A passive isolator is interposed between the small mass and the payload mass. In the instance where the stiff actuators are piezoelectric motors, the sidewalls of the case are used to provide compressive force along the variable length of each of the horizontal piezoelectric motor elements to prevent damage to same.

The object of the invention is to create a noise reduction system for connecting a noise source with a body that shows a high efficiency and secured a high stability. A further object of the invention is to create an effective method for suppressing a noise transmission, and to create a helicopter having a suppressed structureborne noise transmission from its main power plant to its helicopter cell.

This object is achieved by means of a noise reduction system with the features of claim 1, by a method according to the features of claim 11, and by means of a helicopter with the features of claim 12.

According to the invention, a noise reduction system for connecting a noise source with the body has at least a piezo actuator for suppressing a noise transmission from the noise structure to the body, wherein the noise reduction system has a first carrying structure to be connected with the noise source and a second carrying structure to be connected with the body, wherein the at least one piezo actuator is positioned between the carrying structures and connects the carrying structures with each other.

The noise reduction system enables to be positioned with its active moving direction in series in a load path between a main power plant and a cell of a helicopter. In general, the power plant consists of at least a main gear box, assembly parts such as a fan and a main rotor. The at least one piezo actuator acts as a structure part that can be excited by a power supply unit, whereupon noise reduction vibrations can be introduced in the structure noise part. By means of the inventive noise reduction system three effective degrees of freedom are provided. A first effective degree of freedom is directed in its longitudinal respectively vertical direction. A second effective degree of freedom is a rotation about its transverse axis. A third effective degree of freedom is a rotation about an axis that is orthogonally to the longitudinal axis and the transversal axis. The noise reduction causes a blocking of a structureborne noise transmission in the longitudinal direction of the connector struts as well as in the transversal direction.

Further on, the noise reduction system can be used for retrofitting. If an adequate quantity of piezo actuators is provided, the main power plant and the helicopter cell are only connected to each other by the piezo actuators. Herewith, a high efficiency and a high stability can be reached. As the inventive noise reduction system can be installed at the helicopter cell, requirements for certification reasons regarding electrical current do not appear. In particular, as the piezo actuators are fixed to the helicopter cell, the wiring of the noise reduction system is simplified.

In order to avoid a destruction of the at least one piezo actuator due to inadequate elongation, at least one pretension element for preventing an elongation of the at least one piezo actuator is positioned in series with the at least one piezo actuator.

Preferably, the at least one piezo actuator is such positioned between the aforementioned exemplary main power plant and the helicopter cell that in flight it is pressure loaded, i.e. shortened. Thus, in principal, an inadequate elongation could only appear on ground. However, in order to avoid such an elongation on ground, the at least one pretension element is provided generating a pressure force in counterdirection to the elongation. In one embodiment, the at least one pretension element is a spring such as a plate spring that can be pretensioned by the weight of the helicopter cell.

In another embodiment, the pretension element is a so called antagonist-piezo actuator acting in a counterdirection of the primary piezo actuator. Such a noise reduction system enables an orientation in a direction in which the pretention cannot be generated by weight. For instance, by means of at least an antagonist- piezo actuator as a pretension element, the noise reduction system can be positioned horizontally, i.e. in an orientation in which the active moving direction of the at least one primary piezo actuator is in a horizontal direction and thus in a direction in which no weight, for instance of a helicopter cell, acts.

In order to avoid a separation of the carrying structures in the unlikely event that the at least piezo actuator is destroyed, for example due to an inadequate elongation or shortening, a fallback- system for limiting a maximum positive or negative alternation of length of the at least one piezo actuator is provided. Hereby, the carrying structures abut mechanically against each other if a maximum positive or negative alternation of length appears.

Additionally, to the at least one piezo actuator the second carrying structure can has at least one vibration insulation element being in series with the at least one piezo actuator. By means of this, a more effective noise reduction can be achieved. Preferably, the at least one vibration insulation element is a passive element, in particular a low frequency passive vibration insulation element. One example for a passive vibration insulation element is the so-called Antiresonance-Rotor-Insulation-System (ARIS). Thereby, the at least piezo actuator can be integrated in ARIS. Thus, the design size can be reduced.

Further on, heat generated by the at least one piezo actuator can be used for further applications. Thus, the at least one piezo actuator is a heat source for further applications. For instance, the heat generated by the at least one piezo actuator can be used for warming up hydraulic fluid of ARIS. By means of this, a weight reduction can be achieved as less hydraulic fluid is necessary.

Preferably, the second carrying structure has a stop element positioned between an attachment point for purposes of connection the second carrying structure to the noise source and the at least one vibration insulation element. The stop element creates a mechanical stop with a counterelement of the first carrying structure for limiting a maximum positive or negative alternation of length of the at least one piezo actuator and/or of the at least one vibration element. Hereby, a further fallback-system is created, considering in particular the installation of the at least one vibration insulation element.

In a preferred embodiment, the at least one piezo actuator is an annular body that is connected with its front ends to the carrying structures, wherein a tie rod is led through the at least piezo actuator. The tie rod is connected with one end to the first carrying structure and is led with its free section through the second carrying structure, wherein the at least one pretension element is positioned between a free end of the tie rod and the second carrying structure. Thus an arrangement is advantageously for detecting the structure noise and transferring noise reduction vibrations in the noise transmission path between the noise source and the body.

In order to react directly on the structure noise, the noise reduction system comprises at least a control circuit, having a detector for detecting at least one physical value and which is aligned to the at least one piezo actuator, an evaluation unit for evaluating the physical value and an activation unit for activating the at least one piezo actuator in dependence on the detected physical value. Thereby, it is preferred, that the physical value is acceleration. An acceleration detector enables an ease detection of longitudinal and bending directions via matrix calculations. Preferably the detector is such aligned to the at least on piezo actuator that they are positioned on one vertical axis. The activation unit comprises a control element having preferably an integrated amplifier, for instance. Preferably, the detector is attached to the free end of the tie rod, so that the structure noise can be detected on very a short way.

Preferably, at least one second detector is provided for detecting a second physical value which is different to the first physical value. In a preferred embodiment of the control circuit, the second physical value is a detector for detecting a rotation speed, for instance the rotation speed of the main rotor or of a drive shaft of the main gear box, which is then considered for evaluation. Further on, the control circuit can comprise at least one filter element for extracting interference signals. The interfering signals are then eliminated by actuating the piezo actuators for generating countersignals later.

In one preferred embodiment, the noise reduction system comprises a plurality of parallel piezo actuators. Thus, holding forces acting on each piezo actuator due to their structural integration in the load path is reduced. This is advantageously for generating and introducing the noise suppressing vibrations. In this case it is preferred, if the piezo actuators of one noise reduction system are acting as a single unit und are activated simultaneously. It is preferred, when the noise reduction system comprises only one vibration insulation element. The application of only one vibration insulation element additional to the piezo actuators simplifies the noise reduction process over all.

According to the invention, in a method for suppressing a noise transmission generated by a noise source to a body to which the noise source is attached, interfering signals of a structureborne noise are determined and suppressed by countersignals produced by at least one piezo actuator acting as a structural part and being positioned with its active moving direction in series with the noise source and the body. Such a method enables a very effective structureborne noise reduction, as the at least in piezo actuator is integrated in load path.

According to the invention, a helicopter has a main power plant that is connected with its cell by a plurality of noise reduction systems according to the invention. Hereby, a transmission of a structureborne noise generated by the power plant and thus a transformation of the structureborne noise in a cabin as airborne noise is suppressed. Preferably, one noise reduction system is integrated in each connector strut extending between the main power plant and the helicopter cell. Additionally, one noise reduction system can be integrated in a connector strut extending horizontally. In general, the power plant consists of at least a main gear box, assembly parts such as a fan and a main rotor.

It is preferred that each noise reduction system can be activated individually independent on an activation of the other noise reduction systems. By means of this, each noise transmission path is watched individually.

Further advantageous examples of the embodiment of the invention are the subjects of further subsidiary claims.

In what follows preferred examples of the embodiment of the invention are illustrated in more detail with the aid of highly simplified schematic representations. Here:
Figure 1 shows a front view of a helicopter showing a main power plant being connected to a helicopter cell by vertical connector struts,
Figure 2 shows a schematic integration of a first embodiment of an inventive noise reduction system in the vertical connector struts,
Figure 3 shows the principle construction of the noise reduction system,
Figure 4 shows a cross-section of the noise reduction system shown in Figure 3, and
Figure 5 shows a second embodiment of an inventive noise reduction system according to the invention.

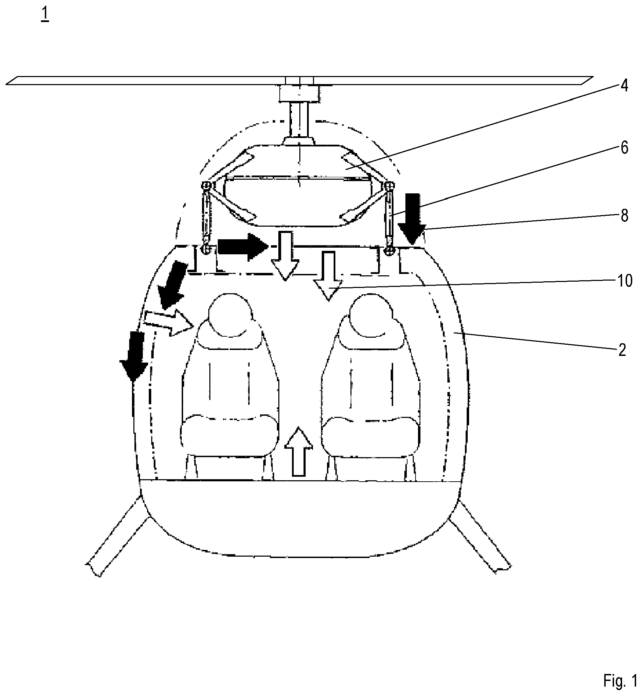

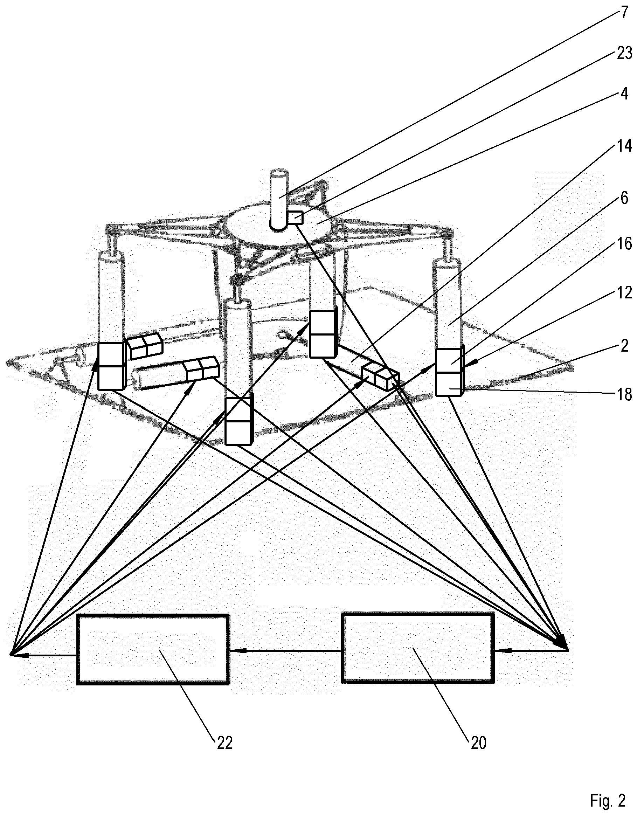

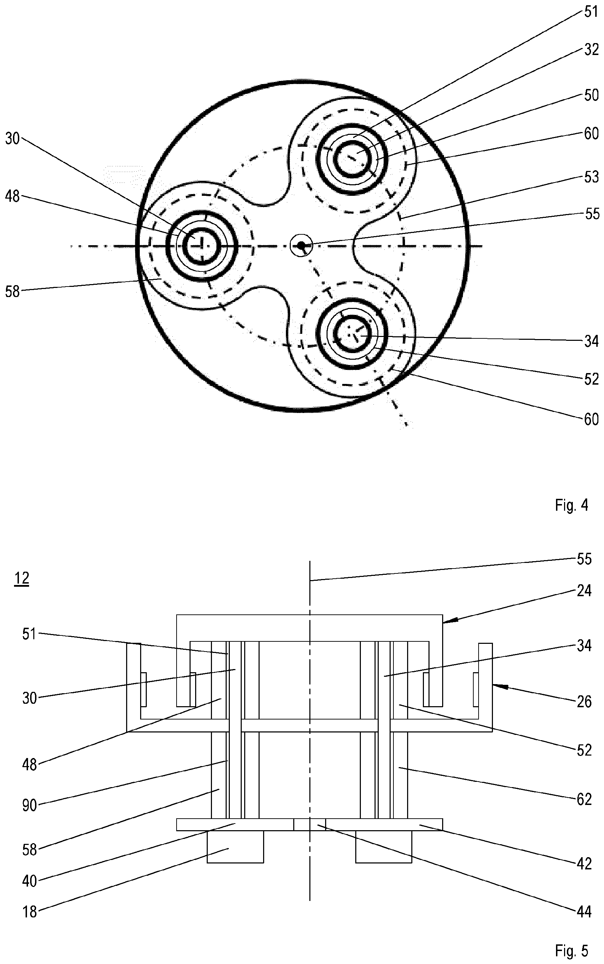

In Figure 1, a helicopter 1 according to the invention is shown. The helicopter 1 has a fuselage or a cell 2 defining a cabin and a power plant 4. The power plant 4, a noise source respectively a vibration source, is connected to the cell 2 respectively a body by a plurality of vertical connector struts 6. In general, the power plant 4 consists of at least a main gear box, assembly parts such as a fan and a main rotor 7, which for the sake of simplicity is here illustrated as a rotor shaft. Thus, in the shown embodiment the connector struts 6 are main gear box struts. In order to avoid a transmission of a structure noise 8 generated by the power plant 4 and thus in order to avoid a transformation of the structure noise 8 in airborne noise 10 in the cabin, as shown in figure 2, in each vertical connector 6 a first embodiment of an inventive noise reduction system 12 is integrated. Thus, the power plant 4 is connected structurally to the helicopter cell 2 by a plurality of noise reduction systems 12. Additionally, a second embodiment of the noise reduction system 12 can be integrated in horizontal connector struts 14. The second embodiment is descripted in figure 5.

According to figure 2, the first embodiment of the noise reduction system 12 comprises at least one piezo actuator 16 which is positioned in series between the power plant 4 and the cell 2 by integration in the vertical connector struts 6. The noise reduction systems 12 are connected with a control circuit comprising a detector 18 or sensor, respectively, for measuring a physical value such as acceleration, an evaluation unit 20 for evaluating the measured/detected value or signals, respectively, and an activation unit 22 for activating the piezo actuators 16 in dependence on the detected physical value in order to suppress the transmission and the transfer of structure noise 8 in the airborne noise 10. Therefore, the activation unit 22 comprises a control element. Additionally, an amplifier is integrated into the activation unit 22 for amplifying the activation signal of the control element to the piezo actuators 16. Preferably, the control element is a micro controller and the amplifier operates in a pulsed mode. A quantity of the detectors depends on the quantity of piezo actuators 16. As shown in the following figures, in this embodiment the same quantities of detectors 18 and piezo actuators 48, 50, 52 are provided.

Additionally, a detector for detecting a second physical value different from the first physical value is provided. Here, the second detector 23 is a detector 23 for detecting a rotation speed of the rotor 7. Further on, in the shown embodiment it is preferred, if the detected acceleration is filtered in such a way that interfering signals such as interfering vibrations are extracted from the measured signals first, wherein the interfering signals are then eliminated by actuating the piezo actuators 16 for generating countersignals. Hereby, each piezo actuator 16 can be actuated individually. Additionally, an amplifier not illustrated can be provided for amplifying the activation signal of the piezo actuators 16. Preferably, in the amplifier is integrated into the at least one piezo actuator 16.

If, as mentioned in figure 1, a plurality of noise reduction systems 12 is provided, each single noise reduction system 12 can be actuated individually. If, as shown in the following figures, a noise reduction system 12 consists of more than one piezo actuators 48, 50, 52, the piezo actuators 48, 50, 52 of one noise reduction system 12 form a joint piezo actuator unit and are actuated simultaneously.

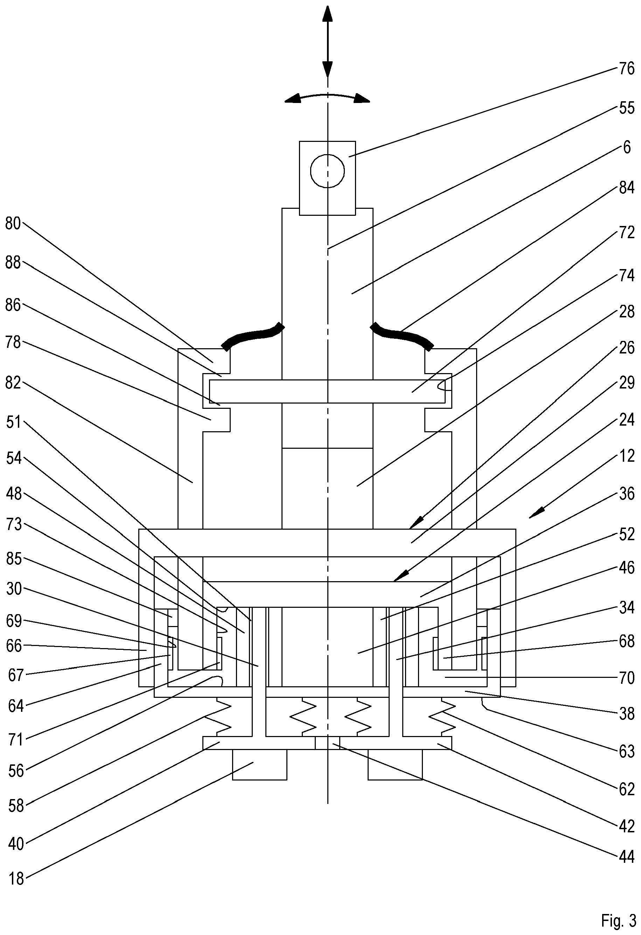

In figures 3 and 4, the first embodiment of the noise reduction system 12 is illustrated in more detail. The noise reduction system 12 has a first carrying structure 24 and a second carrying structure 26. The first carrying structure 24 is fixed to the cell 2 and the second carrying structure 26 is fixed to each vertical connector strut 6 and thus to the power plant 4 respectively the noise source. Further on, the noise reduction system 12 has one vibration insulation element 28.

The vibration insulation element 28 is for example a passive element and in particular a passive low frequency element such as the known so-called ARIS (Antiresonance-Rotor-Insulation-System). It is positioned between the connector strut 6 and an upper part 29 of the second carrying structure 26 and forms a structural connection between them.

The noise reduction system 12 has in this embodiment three parallel tie rods 30, 32, 34 which are attached with their one front end to an upper part 36 of the first carrying structure 24 and which are led through a lower part 38 of the second carrying structure 26 with their free sections. Each tie rod 30, 32, 34 has a broadened free end 40, 42, which are optionally connected to each other by an anti-rotary device 44.

In a space 46 between the upper part 36 of the first carrying structure 24 and the lower part 38 of the second carrying structure 26 three piezo actuators 48, 50, 52 are positioned. In the shown embodiment, three parallel piezo actuators 48, 50, 52 are provided. The piezo actuators 48, 50, 52 are annular bodies that encompass the tie rods 30, 32, 34 and which are connected with their front ends to an inner surface 54 of the upper part 36 and to an opposite inner surface 56 of the lower part 38. Thereby, the piezo actuators 48, 50, 42 are radially spaced apart with their inner circumferential surfaces from opposite outer circumferential surfaces of the tie rods 30, 32, 34, thus forming an annular space 51. The annular space is filled up with an electrical isolating material having a high heat conductivity. By using a material which has a high heat conductivity, a heat transfer from the piezo actuators 48, 50, 52 to the tie rods 30, 32, 34 is improved in radial direction. In axial direction, the heat is transferred from the piezo actuators 48, 50 to the lower part 38 of the second structure 26 and to the upper part 36 of the first structure 24 by their front ends.

As shown in figure 4, the tie rods 30, 32, 34 and thus the piezo actuators 48, 50, 52 are positioned regularly on a virtual circle 53 that is concentrically to a vertical axis 55 of the connector strut 6 and thus to the vibration insulation element 28 which longitudinal axis is in line with the vertical axis 55. As the piezo actuators 48, 50, 52 are positioned concentrically to the vertical axis 55 of the connector strut 6, the vertical axis 55 represents additionally the active moving direction of the piezo actuators 48, 50, 52.

In order to avoid an elongation of the piezo actuators 48, 50, 52 on ground, a pretension element 58, 60, 62 is allocated to one piezo actuator 48, 50, 52 each. The pretension elements 58, 60, 62 are in the shown embodiment plate springs that are positioned between an outer surface 63 of the lower part 38 of the second carrying structure 26 and the broadened end sections 40, 42 of the tie rods 30, 32, 34. At a lower surface of the broadened end sections 40, 42 the detector 18 are positioned. Thus, each detector 18 is in line with one of the tie rods 30, 32, 34 and further on positioned on the virtual circle 53.

The lower part 38 of the second carrying structure 26 and the upper part 29 of the second carrying structure 26 are connected by vertical sections 64, 66. At least two sections 64 extend in an upward direction from the lower part 38 and at least two sections 66 extend in a downward direction from the upper part 29. In the illustrated embodiment, the vertical sections 64 are a kind of flanges used for attaching the noise reduction system 12 to the power plant 4. Therefore, here the lower part 29 and its vertical sections 64 are U-shaped. Preferably, the connection to the power plant 4 is done by threaded systems, wherein nuts 67 are fixed to an inner surface 69 of the sections 64 for receiving screws or threaded bolts. In order to prevent an unintentional loosen of the threaded systems, adequate anti-rotating means are provided.

In order to create a fallback-system in the unlikely event that the piezo actuators 48, 50, 52 are damaged, a mechanical stop is provided between the lower part 38 of the second element 26 and the upper part 28 first carrying structure 24. For this, the upper part 36 of the first carrying structure 24 has at least two vertical sections 68 extending in downward direction to the lower part 38 of the second carrying structure 26. The sections 68 has such a length that in a normal state a gap 70 is provided to the inner surface 56 of the lower part 38 of the carrying structure 26. If in the unlikely event of a breakdown of the piezo actuators, in flight the cylindrical wall 68 abuts against the inner surface 56 of the lower part 38 of the second carrying structure 26. In the illustrated embodiment, the vertical sections 68 are a kind of flanges used for attaching the noise reduction system 12 to the helicopter cell 2. Therefore, here the upper part 36 and its vertical sections 68 are U-shaped. Preferably, the connection to the helicopter cell 2 is done by threaded systems, wherein nuts 71 are fixed to an inner surface 73 of the sections 68 for receiving screws or threaded bolts. In order to prevent an unintentional loosen of the threaded systems, adequate anti-rotating means are provided.

The orientation of the upper vertical sections 64 of the second carrying structure 26 and the lower vertical sections 68 of the first carrying structure 24 are here in such a way relative to each other that they are inclined in an angle of 90° related to the longitudinal axis 55. By means of this, the attaching of the noise reduction system 12 to the helicopter cell 2 and the power plant 4 is facilitated as the vertical sections 64, 68 or flanges do not block the access to each other.

If, as exemplary shown, the vibration insulation element 28 is integrated in the noise reduction system 12 and positioned between the connector strut 6 and the upper part 29 of the second carrying structure 26, a further fallback-system is provided. This fallback- system is a mechanical stop and used for both, limiting a maximum positive or negative alternation of length of the piezo actuators 48, 50, 52 and limiting a maximum positive or negative alternation of length of the at least one vibration insulation element 28. It comprises a stop element 72 allocated to the connector strut 6 and a counterelement 74 allocated to the first carrying structure 24.

In the shown embodiment, the stop element 72 is an annular shoulder extending radially from the connector strut 6 between an attachment point 76 for purposes of attachment the noise reduction system 12 to the power plant 4. The counterelement 74 is a groove having a lower groove wall 78 and an upper groove wall 80 between which the stop element 72 is positioned. The groove respectively their horizontal walls 78, 80 are provided on an inner side of a vertical holding element 82. The vertical holding element 82 is led through the upper part 29 of the second carrying structure 26 and has a foot section which is attached to the lower wall 68 of the upper part 38 of the first carrying structure 24 and a head section forming the counterelement respectively the groove 74. Preferably the holding element 82 has a cylindrical shape as is in threaded connection with the wall 68 of the first carrying structure 24 and thereby secured against rotation. Due to the preferred cylindrical shape at least a laterally housing is created protection the vibration insulation element 28 against pollution. In order to close the housing in vertical direction, a seal 84 in provided extending form the counterstrut 6 to the upper groove wall 90. In order to prevent pollution from entering the space 46 in which the piezo actuators 48, 50, 52 are positioned, a seal is provided in a clearance 85 between the upper section 56 of the lower part 38 of the second carrying structure 26 and the feed section of the holding element 82.

In normal state the stop element 72 is spaced apart from the lower groove wall 78 and from the upper groove wall 80 such that a lower gap 86 and an upper gap 88 are provided. Preferably, the gaps 86, 88 have a greater extension in vertical direction than the gap 70 between the wall 68 of the first carrying section 24 and the lower part 38 of the second carrying section 26. Thus the mechanic stop created by the stop element 72 and the counterelement 74 acts firstly, wherein the mechanic stop created by the wall 68 and the lower part 38 acts secondly.

As shown in figure 5, in difference to the first embodiment shown before three pretension elements 58, 60, 62 are piezo actuators as well. Due to the used perspective in figure 5, only two pretension elements 58, 60 and two original pierzoactuators 48, 52 are shown. The pretension elements 58, 60, 62 are acting as or are antagonist- piezo actuators, such that an elongation of the piezo actuators 48,
50, 52 on ground is prevented. As mentioned before, preferably, the embodiment shown in figure 5 is used for integration into the horizontal connector struts 14. The antagonist-piezo actuators 58,
60, 62 are also radially spaced apart with their inner circumferential surfaces from opposite outer circumferential surfaces of the tie rods 30, 32, 34, thus forming an annular space 90. The annular space 90 is also filled up with an electrical isolating material having a high heat conductivity. In axial direction, the heat is also transferred from the piezo actuators 58, 60, 62 to the lower part 38 of the second structure 26 and to the end sections 40, 42 of the tie rods 30, 32, 34 by their front ends. Other references used in figure 5 refer to the same constructive elements as descripted in Figure 3.

Disclosed is a noise reduction system for connecting a noise source with the body, having at least one piezo actuator for suppressing a noise transmission from the noise source to the body, characterized in that the noise reduction system has a first carrying structure to be connected with the noise source and a second carrying structure to be connected with the body, wherein the at least one piezo actuator is positioned in series with the carrying structures and connects them with each other, such that the at least one piezo actuator forms a structural loaded part, a method for suppressing a noise transmission, and a helicopter.

### Reference List

- 1: helicopter
- 2: fuselage / cell / body
- 4: power plant / noise source
- 6: vertical connector strut
- 7: main rotor
- 8: structureborne noise / structureborne sound / body noise
- 10: airborne noise
- 12: noise reduction system
- 14: horizontal connector strut
- 16: piezo actuator
- 18: detector / sensor
- 20: evaluation unit
- 22: activation unit
- 23: detector /sensor
- 24: first carrying structure
- 26: second carrying structure
- 28: vibration insulation element
- 29: upper part
- 30: tie rod
- 32: tie rod
- 34: tie rod
- 36: upper part
- 38: lower part
- 40: end section
- 42: end section
- 44: anti-rotary device
- 46: space
- 48: piezo actuator
- 50: piezo actuator
- 52: piezo actuator
- 51: annular space
- 53: virtual circle
- 54: inner surface
- 55: vertical axis
- 56: inner surface
- 58: pretension element / plate spring/ antagonist-piezo actuator
- 60: pretension element / plate spring/ antagonist-piezo actuator
- 62: pretension element / plate spring / antagonist-piezo actuator
- 63: outer surface
- 64: section of lower part
- 66: section of upper part
- 67: nut
- 68: section of upper part
- 69: inner surface
- 70: gap
- 71: nut
- 72: stop element
- 73: inner surface
- 74: counterelement
- 76: attachment point
- 78: lower wall
- 80: upper wall
- 82: holding element
- 84: seal
- 85: seal
- 86: lower gap
- 88: upper gap
- 90: annular space

## Claims

1. A noise reduction system (12) for connecting a noise source (4) with a body (2), having at least a piezo actuator (16, 48, 50, 52) for suppressing a noise transmission from the noise source (4) to the body (2), wherein
the noise reduction system (12) has a first carrying structure (24) to be connected with the body (2) and a second carrying structure (26) to be connected with the noise source (4),
wherein the at least one piezo actuator (16, 48, 50, 52) is positioned between the carrying structures (24, 26) and connects the carrying structures (24, 26) with each other, and
wherein at least one pretension element (58, 60, 62) for preventing an elongation of the at least one piezo actuator (16, 48, 50, 52) is positioned in series with the at least one piezo actuator (16, 48,50, 52),
**characterized in that** the carrying structures (24, 26) are configured to create a mechanical stop for limiting a maximum positive or negative alternation of length of the at least one piezo actuator (16, 48, 50, 52).

2. The noise reduction system according to claim 1, wherein the at least one pretension element (58, 60, 62) is an antagonist-piezo actuator.

3. The noise reduction system according any of the preceding claims, wherein the second carrying structure (24, 26) has at least one vibration insulation element (28) being in series with the at least one piezo actuator (16, 48, 50, 52).

4. The noise reduction system according any of the preceding claims, wherein the at least one piezo actuator (16, 48, 50, 52) is a heat source for further applications.

5. The noise reduction system according claim 3 or 4, wherein the second carrying structure (26) has a stop element positioned between an attachment point (76) for purposes of connection the second carrying structure (26) to the noise source (4) and the at least one vibration insulation element (28) creating a mechanical stop with a counterelement (72) of the first carrying structure (24) for limiting a maximum positive or negative alternation of length of the at least one piezo actuator (16, 48, 50, 52) and/or the at least one vibration insulation element (28).

6. The noise reduction system according any of the claims 1 to 5, wherein the at least one piezo actuator (16, 48, 50, 52) is a annular body that is connected with its front ends to the carrying structures (24, 26), wherein a tie rod is led through the piezo actuator (16, 48, 50, 52), wherein the tie rod (30, 32, 34) is connected with one end to the first carrying structure (24) and is led with its free section through the second carrying structure (26), wherein the at least one pretension element (58, 60, 62) is positioned between a free end (40, 42) of the tie rod (30, 32, 34) and the second carrying structure (26).

7. The noise reduction system according to any of the preceding claims, wherein the noise reduction system (12) comprises at least a control circuit, having a detector (18) for detecting at least one physical value and which is aligned to the at least one piezo actuator (16, 48, 50, 52), an evaluation unit (20) for evaluating the physical value and an activation unit (22) for activating the at least one piezo actuator (16, 48, 50, 52) in dependence on the detected physical value.

8. The noise reduction system according claim 7, wherein a second detector (23) is provided for detecting a second physical value which is different to the first physical value.

9. The noise reduction system according any of the preceding claims, wherein the noise reduction system (12) comprises a plurality of parallel piezo actuators (16, 48, 50, 52).

10. The noise reduction system according claim 9, wherein each piezo actuator (16, 48, 50, 52) can be controlled individually.

11. A method for suppressing a noise transmission generated by a noise source (4) to a body (2) to which the noise source (4) is attached, wherein interfering signals of a structureborne noise (8) are determined and suppressed by countersignals generated by at least one piezo actuator (16, 48, 50, 52) acting as a structural part and being positioned with its active moving direction in series with the noise source (4) and the body (2), wherein at least one pretension element (58, 60, 62) for preventing an elongation of the at least one piezo actuator (16, 48, 50, 52) is positioned in series with the at least one piezo actuator (16, 48, 50, 52) and wherein a mechanical stop for limiting a maximum positive or negative alternation of length of the at least one piezo actuator (16, 48, 50, 52) is created by carrying structures (24, 26) connected to the body (2) and the noise source, respectively, which in turn are connected to each other by the at least one piezo actuator (16, 48, 50, 52) arranged between them.

12. A helicopter, wherein the power plant (4) is connected with a helicopter fuselage (2) by a plurality of noise reduction systems (12) according to any of the claims 1 to 11.

13. The helicopter to claim 12, wherein the noise reduction systems (12) can be actuated individually.

## Patentansprüche

1. Schallreduzierungssystem (12) zum Verbinden einer Schallquelle (4) mit einem Körper (2), das mindestens einen Piezoaktor (16, 48, 50, 52) zum Unterdrücken einer Schallübertragung von der Schallquelle (4) auf den Körper (2) aufweist, wobei
das Schallreduzierungssystem (12) eine mit dem Körper (2) verbindbare erste Tragestruktur (24) und eine mit der Schallquelle (4) verbindbare zweite Tragestruktur (26) aufweist,
wobei der mindestens eine Piezoaktor (16, 48, 50, 52) zwischen den Tragestrukturen (24, 26) positioniert ist und die Tragestrukturen (24, 26) miteinander verbindet, und
wobei mindestens ein Vorspannelement (58, 60, 62) zum Verhindern einer Dehnung des mindestens einen Piezoaktors (16, 48, 50, 52) in Serie mit dem mindestens einen Piezoaktor (16, 48, 50, 52) positioniert ist,
**dadurch gekennzeichnet, dass** die Tragestrukturen (24, 26) ausgestaltet sind, einen mechanischen Anschlag zum Begrenzen einer maximalen positiven oder negativen Längenänderung des mindestens einen Piezoaktors (16, 48, 50, 52) herzustellen.

2. Schallreduzierungssystem nach Anspruch 1, wobei das mindestens eine Vorspannelement (58, 60, 62) ein Piezo-Gegenaktor ist.

3. Schallreduzierungssystem nach einem der vorhergehenden Ansprüche, wobei die zweite Tragestruktur (24, 26) mindestens ein Schwingungsisolationselement (28) in Serie mit dem mindestens einen Piezoaktor (16, 48, 50, 52) aufweist.

4. Schallreduzierungssystem nach einem der vorhergehenden Ansprüche, wobei der mindestens eine Piezoaktor (16, 48, 50, 52) eine Wärmequelle für weitere Anwendungen ist.

5. Schallreduzierungssystem nach Anspruch 3 oder 4, wobei die zweite Tragestruktur (26) ein Anschlagelement aufweist, das zwischen einem Befestigungspunkt (76) zu Zwecken einer Verbindung der zweiten Tragestruktur (26) mit der Schallquelle (4) und dem mindestens einen Schallisolationselement (28) positioniert ist, das einen mechanischen Anschlag mit einem Gegenelement (72) der ersten Tragestruktur (24) zum Begrenzen einer maximalen positiven oder negativen Längenänderung des mindestens einen Piezoaktors (16, 48, 50, 52) und/oder des mindestens einen Vibrationsisolationselement (28) herstellt.

6. Schallreduzierungssystem nach einem der Ansprüche 1 bis 5, wobei der mindestens eine Piezoaktor (16, 48, 50, 52) ein ringförmiger Körper ist, der mit seinen vorderen Enden mit den Tragestrukturen (24, 26) verbunden ist, wobei eine Verbindungsstange durch den Piezoaktor (16, 48, 50, 52) geführt ist, wobei die Verbindungsstange (30, 32, 34) mit einem Ende mit der ersten Tragestruktur (24) verbunden ist und mit ihrem freien Abschnitt durch die zweite Tragestruktur (26) geführt ist, wobei das mindestens eine Vorspannelement (58, 60, 62) zwischen einem freien Ende (40, 42) der Verbindungsstange (30, 32, 34) und der zweiten Tragestruktur (26) positioniert ist.

7. Schallreduzierungssystem nach einem der vorhergehenden Ansprüche, wobei das Schallreduzierungssystem (12) mindestens eine Steuerschaltung, die einen Detektor (18) zum Detektieren mindestens eines physikalischen Werts aufweist und die mit dem mindestens einen Piezoaktor (16, 48, 50, 52) ausgerichtet ist, eine Auswerteeinheit (20) zum Auswerten des physikalischen Werts und eine Aktivierungseinheit (22) zum Aktivieren des mindestens einen Piezoaktors (16, 48, 50, 52) in Abhängigkeit von dem detektierten physikalischen Wert umfasst.

8. Schallreduzierungssystem nach Anspruch 7, wobei ein zweiter Detektor (23) zum Detektieren eines zweiten physikalischen Werts bereitgestellt ist, der sich von dem ersten physikalischen Wert unterscheidet.

9. Schallreduzierungssystem nach einem der vorhergehenden Ansprüche, wobei das Schallreduzierungssystem (12) eine Mehrzahl von parallelen Piezoaktoren (16, 48, 50, 52) umfasst.

10. Schallreduzierungssystem nach Anspruch 9, wobei jeder Piezoaktor (16, 48, 50, 52) einzeln steuerbar ist.

11. Verfahren zum Unterdrücken einer Übertragung von durch eine Schallquelle (4) erzeugtem Schall auf einen Körper (2), an dem die Schallquelle (4) befestigt ist, wobei Störsignale eines Körperschalls (8) durch Gegensignale bestimmt und unterdrückt werden, die durch mindestens einen Piezoaktor (16, 48, 50, 52) erzeugt werden, der als ein Konstruktionselement dient und mit seiner aktiven Bewegungsrichtung in Serie mit der Schallquelle (4) und dem Körper (2) positioniert ist, wobei mindestens ein Vorspannelement (58, 60, 62) zum Verhindern einer Dehnung des mindestens einen Piezoaktors (16, 48, 50, 52) in Serie mit dem mindestens einen Piezoaktor (16, 48, 50, 52) positioniert ist und wobei ein mechanischer Anschlag zum Begrenzen einer maximalen positiven oder negativen Längenänderung des mindestens einen Piezoaktors (16, 48, 50, 52) durch Tragestrukturen (24, 26) hergestellt ist, die mit dem Körper (2) bzw. der Schallquelle verbunden sind, die wiederum durch den mindestens einen zwischen ihnen angeordneten Piezoaktor (16, 48, 50, 52) miteinander verbunden sind.

12. Helikopter, wobei das Triebwerk (4) mit einem Helikopterrumpf (2) durch eine Mehrzahl von Schallreduzierungssystemen (12) nach einem der Ansprüche 1 bis 11 verbunden ist.

13. Helikopter nach Anspruch 12, wobei die Schallreduzierungssysteme (12) einzeln aktivierbar sind.

## Revendications

1. Système de réduction de bruit (12) pour relier une source de bruit (4) à un corps (2), ayant au moins un piézo-actionneur (16, 48, 50, 52) pour supprimer une transmission de bruit de la source de bruit (4) au corps (2),
le système de réduction du bruit (12) ayant une première structure porteuse (24) à relier au corps (2) et une deuxième structure porteuse (26) à relier à la source de bruit (4),
l'au moins un piézo-actionneur (16, 48, 50, 52) étant positionné entre les structures porteuses (24, 26) et reliant les structures porteuses (24, 26) entre elles, et
au moins un élément de précontrainte (58, 60, 62) pour empêcher un allongement de l'au moins un piézo-actionneur (16, 48, 50, 52) étant positionné en série avec l'au moins un piézo-actionneur (16, 48, 50, 52), **caractérisé en ce que** les structures porteuses (24, 26) sont configurées pour créer une butée mécanique pour limiter une alternance positive ou négative maximale de la longueur de l'au moins un piézo-actionneur (16, 48, 50, 52) .

2. Système de réduction du bruit selon la revendication 1, l'au moins un élément de précontrainte (58, 60, 62) étant un piézo-actionneur antagoniste.

3. Système de réduction du bruit selon l'une des revendications précédentes, la deuxième structure porteuse (24, 26) ayant au moins un élément d'isolation des vibrations (28) qui est en série avec l'au moins un piézo-actionneur (16, 48, 50, 52).

4. Système de réduction du bruit selon l'une quelconque des revendications précédentes, l'au moins un piézo-actionneur (16, 48, 50, 52) étant une source de chaleur pour d'autres applications.

5. Système de réduction du bruit selon la revendication 3 ou 4, la deuxième structure porteuse (26) ayant un élément de butée positionné entre un point de fixation (76) pour relier la deuxième structure porteuse (26) à la source de bruit (4) et l'au moins un élément d'isolation des vibrations (28) créant une butée mécanique avec un contre-élément (72) de la première structure porteuse (24) pour limiter une alternance positive ou négative maximale de la longueur de l'au moins un piézo-actionneur (16, 48, 50, 52) et/ou de l'au moins un élément d'isolation des vibrations (28).

6. Système de réduction du bruit selon l'une quelconque des revendications 1 à 5, l'au moins un piézo-actionneur (16, 48, 50, 52) étant un corps annulaire qui est relié par ses extrémités avant aux structures porteuses (24, 26), une tige de traction étant guidée à travers le piézo-actionneur (16, 48, 50, 52), la tige de traction (30, 32, 34) étant reliée par une extrémité à la première structure porteuse (24) et étant guidée avec sa section libre à travers la deuxième structure porteuse (26), l'au moins un élément de précontrainte (58, 60, 62) étant positionné entre une extrémité libre (40, 42) de la tige de traction (30, 32, 34) et la deuxième structure porteuse (26).

7. Système de réduction du bruit selon l'une quelconque des revendications précédentes, le système de réduction du bruit (12) comprenant au moins un circuit de commande, ayant un détecteur (18) pour la détection d'au moins une valeur physique et qui est aligné sur l'au moins un piézo-actionneur (16, 48, 50, 52), une unité d'évaluation (20) pour l'évaluation de la valeur physique et une unité d'activation (22) pour l'activation de l'au moins un piézo-actionneur (16, 48, 50, 52) en fonction de la valeur physique détectée.

8. Système de réduction du bruit selon la revendication 7, un deuxième détecteur (23) étant prévu pour détecter une deuxième valeur physique différente de la première valeur physique.

9. Système de réduction du bruit selon l'une des revendications précédentes, le système de réduction du bruit (12) comprenant une pluralité de piézo-actionneurs parallèles (16, 48, 50, 52).

10. Système de réduction du bruit selon la revendication 9, chaque piézo-actionneur (16, 48, 50, 52) pouvant être commandé individuellement.

11. Procédé pour supprimer une transmission de bruit générée par une source de bruit (4) vers un corps (2) auquel la source de bruit (4) est fixée, des signaux d'interférence d'un bruit de structure (8) étant déterminés et supprimés par des signaux de comptage générés par au moins un piézo-actionneur (16, 48, 50, 52) agissant comme un élément de structure et positionné avec sa direction de déplacement active en série avec la source de bruit (4) et le corps (2), au moins un élément de précontrainte (58, 60, 62) pour empêcher un allongement de l'au moins un piézo-actionneur (16, 48, 50, 52) étant positionné en série avec l'au moins un piézo-actionneur (16, 48, 50, 52) et une butée mécanique pour limiter une alternance positive ou négative maximale de la longueur de l'au moins un piézo-actionneur (16, 48, 50, 52) étant créée par des structures porteuses (24, 26) reliées au corps (2) et à la source de bruit, respectivement, qui sont à leur tour reliées entre elles par l'au moins un piézo-actionneur (16, 48, 50, 52) agencé entre elles.

12. Hélicoptère, le groupe motopropulseur (4) étant relié à un fuselage d'hélicoptère (2) par une pluralité de systèmes de réduction de bruit (12) selon l'une quelconque des revendications 1 à 11.

13. Hélicoptère selon la revendication 12, les systèmes de réduction du bruit (12) pouvant être actionnés individuellement.
